(19) Europäisches Patentamt / European Patent Office / Office européen des brevets

(11) **EP 3 290 961 A1**

(12) **EUROPEAN PATENT APPLICATION**

(43) Date of publication:
**07.03.2018 Bulletin 2018/10**

(51) Int Cl.:
**G01V 1/48** (2006.01)

(21) Application number: **16306114.6**

(22) Date of filing: **06.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Services Pétroliers Schlumberger**
**75007 Paris (FR)**
Designated Contracting States:
**FR**
• **SCHLUMBERGER TECHNOLOGY B.V.**
**2514 JG  The Hague (NL)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **LE CALVEZ, Jean-Luc**
**92142 CLAMART CEDEX (FR)**
• **BRILL, Thilo M.**
**92142 CLAMART CEDEX (FR)**

(74) Representative: **Schlumberger Cambridge Research Limited et al**
**High Cross**
**Madingley Road**
**Cambridge CB3 0EL (GB)**

(54) **SEPARATION OF FLEXURAL AND EXTENSIONAL MODES IN MULTI MODAL ACOUSTIC SIGNALS**

(57)    Methods for separating flexural and extensional mode signals from a multi-modal signal are provided. In one embodiment, a method includes emitting an ultrasonic pulse to excite a multi-modal Lamb wave in a pipe and then detecting acoustic signals generated from the Lamb wave. The detected acoustic signals are processed to separate the extensional and flexural mode signals. This processing can include filtering the detected acoustic signals with filters that are based on quality factors and dispersion characteristics for the individual modes to produce sets of coefficients, selecting subsets of the coefficients, and using the selected subsets to predict extensional and flexural mode waveforms that are based on the estimated quality factors for the individual modes. Additional methods, systems, and devices are also disclosed.

EP 3 290 961 A1

FIG. 14

**Description**

**BACKGROUND**

Wells are generally drilled into subsurface rocks to access fluids, such as hydrocarbons, stored in subterranean formations. The formations penetrated by a well can be evaluated for various purposes, including for identifying hydrocarbon reservoirs within the formations. During drilling operations, one or more drilling tools in a drill string may be used to test or sample the formations. Following removal of the drill string, a wireline tool may also be run into the well to test or sample the formations. These drilling tools and wireline tools, as well as other wellbore tools conveyed on coiled tubing, slickline, drill pipe, casing or other means of conveyance, are also referred to herein as "downhole tools." A downhole tool may be employed alone or in combination with other downhole tools in a downhole tool string.

As will be appreciated, casing may be run into the well for structural support and for isolating fluids within the wellbore from certain formations (e.g., freshwater reservoirs) penetrated by the well. The casing can be cemented into place within the well. A cement job includes the design and the pumping of a cement slurry inside the well, with the objective of the right cement slurry placement. During a cement job, the cement slurry can be pumped down a casing string in a well, out the bottom of the casing string, and then up the annular space surrounding the casing string. The cement is then allowed to set in the annular space. Various parameters can have a negative impact on the success of a cement job, such as contamination of the cement slurry by drilling mud or poor centralization of the casing within the well. After the cement slurry is pumped into the annulus between the casing and the formation, a downhole tool (e.g., an acoustic logging tool) may be run into the cased well for evaluating the quality of the cement around the casing.

**SUMMARY**

Certain aspects of some embodiments disclosed herein are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

As described in greater detail below, at least some embodiments of the present disclosure relate to separation of flexural and extensional mode components of a multi-modal acoustic signal, such as may be received by an acoustic logging tool performing cement evaluation. In one embodiment, a method includes emitting an ultrasonic pulse toward a casing within a well so as to excite a multi-modal Lamb wave within the casing, the multi-modal Lamb wave having flexural and extensional modes. The method also includes detecting acoustic signals generated by the multi-modal Lamb wave within the casing, and processing the detected acoustic signals to separate acoustic signals generated by the extensional mode from acoustic signals generated by the flexural mode. This processing includes filtering the detected acoustic signals with a first filter bank that filters the detected acoustic signals based on an estimated quality factor for the extensional mode and on dispersion characteristics of the extensional mode to produce a first set of coefficients. The processing also includes filtering the detected acoustic signals with a second filter bank that filters the detected acoustic signals based on an estimated quality factor for the flexural mode and on dispersion characteristics of the flexural mode to produce a second set of coefficients. Additionally, the processing includes selecting subsets of the first and second sets of coefficients and using the selected subsets of coefficients to predict an extensional mode waveform and a flexural mode waveform based on the estimated quality factors for the extensional and flexural modes.

In another embodiment, a method includes emitting an ultrasonic pulse so as to excite a multi-modal Lamb wave having flexural and extensional modes within a pipe and receiving acoustic signals generated by the multi-modal Lamb wave. The method also includes calculating phase velocity and group velocity curves for each of the flexural and extensional modes, as well as calculating a group delay time for each of the flexural and extensional modes. Further, the method includes defining filters based on estimated quality factors for the flexural and extensional modes, decomposing the received acoustic signals via the defined filters, and reconstructing estimates of flexural and extensional wave components of the multi-modal Lamb wave based on the decomposition of the received acoustic signals.

In an additional embodiment, an apparatus includes a downhole tool for acquiring data within a well. The downhole tool includes an acoustic transmitter and an acoustic receiver, which are positioned to allow the acoustic transmitter to emit acoustic signals outwardly from the downhole tool to generate a Lamb wave having flexural and extensional modes in a casing in the well and to allow the acoustic receiver to detect the Lamb wave when the downhole tool is positioned inside the casing. The apparatus also includes an analysis system for receiving data from the downhole tool and separating concurrent flexural and extensional mode components of the detected Lamb wave using quality factors for the flexural and extensional modes.

Various refinements of the features noted above may exist in relation to various aspects of the present embodiments. Further features may also be incorporated in these various aspects. These refinements and additional features may exist individually or in any combination. For instance, various features discussed below in relation to the illustrated embodiments may be incorporated into any of the above-described aspects of the present disclosure alone or in any combination. Again, the brief summary presented above is intended just to familiarize the reader with certain aspects and contexts of some embodiments without limitation to the claimed subject matter.

**BRIEF DESCRIPTION OF THE DRAWINGS**

These and other features, aspects, and advantages of certain embodiments will become better understood when the following detailed description is read with reference to the accompanying drawings in which like characters represent like parts throughout the drawings, wherein:

FIG. 1 generally depicts a downhole tool deployed within a well on a wireline in accordance with one embodiment of the present disclosure;

FIG. 2 represents the downhole tool of FIG. 1 as an acoustic logging tool having obliquely arranged transducers for inducing a Lamb wave within a casing and measuring resulting acoustic signals in accordance with one embodiment;

FIG. 3 is a block diagram of components of a processor-based system that can be used to perform certain monitoring or control operations, such as analysis of data acquired via the acoustic logging tool of FIG. 2, in accordance with one embodiment;

FIG. 4 is a flowchart representing a process for separating concurrent flexural and extensional modes in an acoustic signal in accordance with one embodiment;

FIGS. 5 and 6 are graphs showing quality factors for flexural and extensional modes in accordance with one embodiment;

FIG. 7 generally depicts an iterative filtering of an acoustic signal in accordance with one embodiment;

FIG. 8 depicts an oversampled filter bank having analysis filters and synthesis filters in accordance with one embodiment;

FIGS. 9 and 10 depict tiling of a time-frequency plane for a given quality factor and oversampling rate in accordance with one embodiment;

FIGS. 11 and 12 depict tiling of the time-frequency plane for the given quality factor and oversampling rate of FIGS. 9 and 10, but with the axes of the tiles rotated based on a group delay derivative in accordance with one embodiment;

FIG. 13 depicts theoretical group delay curves for extensional and flexural modes for a pipe in accordance with one embodiment;

FIG. 14 is a flowchart representing another process for separating concurrent flexural and extensional modes in a signal in accordance with one embodiment; and

FIG. 15 is a comparison of reconstructed single-mode extensional and flexural waves and a composite multi-modal wave to synthetic waves in accordance with one embodiment.

**DETAILED DESCRIPTION OF SPECIFIC EMBODIMENTS**

It is to be understood that the present disclosure provides many different embodiments, or examples, for implementing different features of various embodiments. Specific examples of components and arrangements are described below for purposes of explanation and to simplify the present disclosure. These are, of course, merely examples and are not intended to be limiting.

When introducing elements of various embodiments, the articles "a," "an," "the," and "said" are intended to mean that there are one or more of the elements. The terms "comprising," "including," and "having" are intended to be inclusive and mean that there may be additional elements other than the listed elements. Moreover, any use of "top," "bottom," "above," "below," other directional terms, and variations of these terms is made for convenience, but does not mandate any particular orientation of the components.

The present disclosure generally relates to acoustic tools, such as acoustic logging tools that may be used to evaluate cement about a casing in a well. More particularly, at least some embodiments relate to a technique for processing signals acquired by ultrasonic cement evaluation tools. In certain embodiments, the signals are ultrasonic multi-modal guided waves and the signals are separated into a sum of individual signals of zeroth-order symmetric and antisymmetric Lamb modes to improve the quantitative interpretation of measurements.

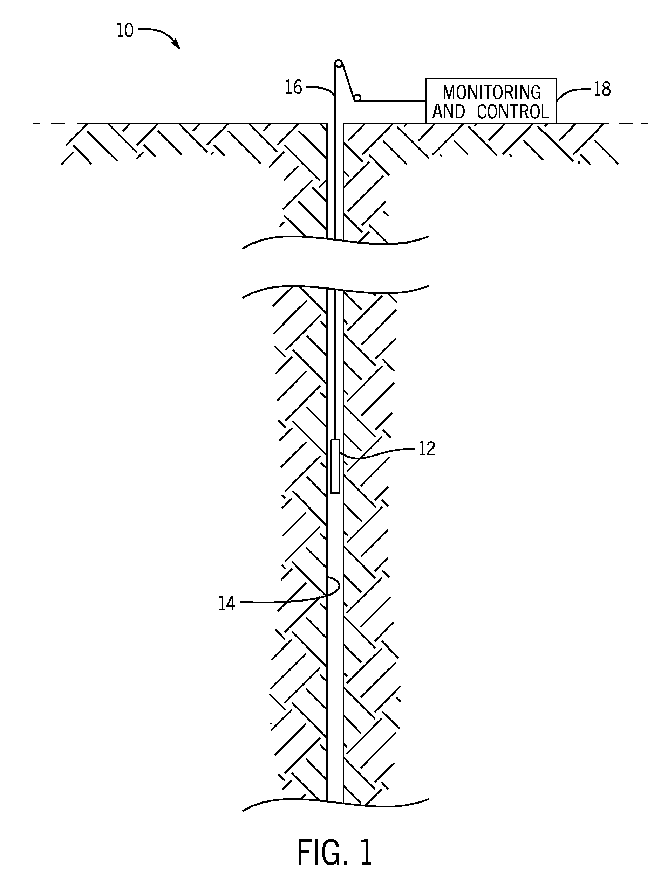

Turning now to the drawings, an apparatus 10 for evaluating cement quality in a well is depicted in FIG. 1 in accordance with one embodiment. In this depicted embodiment, a downhole tool 12 is suspended in a well 14 on a cable 16. The cable 16 may be a wireline cable with at least one conductor that enables data transmission between the downhole tool 12 and a monitoring and control system 18. The cable 16 may be raised and lowered within the well 14 in any suitable manner. For instance, the cable 16 can be reeled from a drum in a service truck, which may be a logging truck having the monitoring and control system 18. Although the downhole tool 12 is depicted in FIG. 1 as being deployed via a cable, the downhole tool 12 could be deployed within the well 14 in any other suitable manner. Further, while the apparatus 10 is shown in FIG. 1 at an onshore well 14, it will be appreciated that the apparatus 10 could be used with an offshore well in full accordance with the present techniques.

The monitoring and control system 18 controls movement of the downhole tool 12 within the well 14 and receives data from the downhole tool 12. The monitoring and control system 18 can include one or more computer systems or devices. The system 18 can receive data from the downhole tool 12, and this data can be stored, communicated to an operator, or processed. Although generally depicted in FIG. 1 at a wellsite, it is noted that the system 18 could be positioned elsewhere, and that the system 18 could be a distributed system with elements provided at different places near or remote from the well 14. For example, a local component of the system 18 may be located at the wellsite for controlling operation of the downhole tool 12 and receiving data from the tool 12, but the received data could be processed by a different portion of the system 18 at another location.

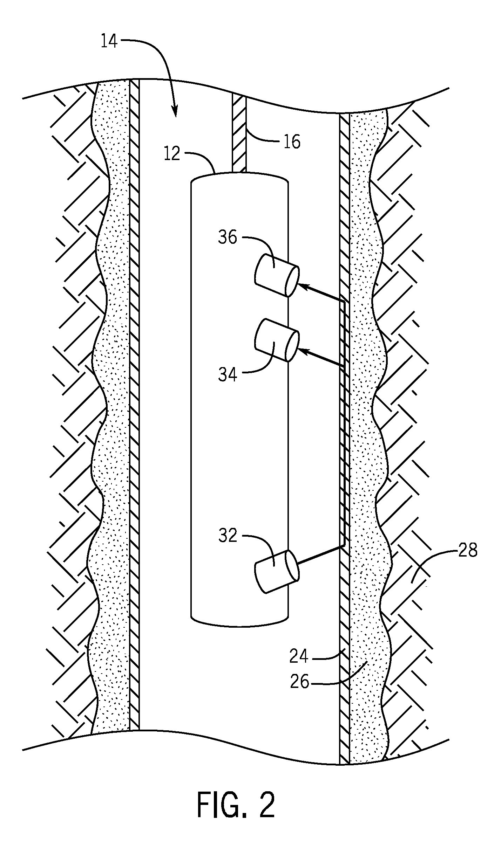

The downhole tool 12 can take various forms, one example of which is depicted in FIG. 2 as an acoustic logging tool lowered within a casing 24 in the well 14. Cement 26 is provided in an annular space between the casing 24 (which may also be referred to as pipe 24) and a formation 28 penetrated by the well 14. The acoustic logging tool includes transducers 32, 34, and 36, which are provided in the form of ultrasonic transducers in at least some instances. In the particular arrangement depicted in FIG. 2, the transducer 32 operates as an emitter (and may accordingly be referred to as an acoustic transmitter or an ultrasonic transmitter), while the transducers 34 and 36 operate as receivers (which may be referred to as acoustic or ultrasonic receivers). Based on their location relative to the transducer 32, the transducer 34 may also be referred to as the "near" receiver and the transducer 36 may be referred to as the "far" receiver.

As described in greater detail below, the transducer 32 can emit an ultrasonic pulse toward the casing 24 so as to excite a multi-modal Lamb wave within the casing 24, while transducers 34 and 36 can measure the resulting signals. The transducers 32, 34, and 36 may be arranged obliquely to facilitate this Lamb wave excitation and measurement. For instance, the transducer 32 may be angled toward the transducers 34 and 36 at an angle of incidence (with respect to the normal of the casing 24), and the transducers 34 and 36 can also be oriented toward the transducer 32 at that angle of incidence. In at least one embodiment, the angle of incidence is selected so as to optimize the excitation and detection of a particular mode (e.g., a flexural mode) of the Lamb wave in the casing 24. The signals measured with the transducers 34 and 36 can be analyzed through various techniques, such as those described below, to facilitate cement evaluation by providing insight into the presence and condition of the cement 26 about the casing 24. Consequently, the acoustic logging tool of FIG. 2 may also be referred to as a cement evaluation tool. Data acquired with the transducers 34 and 36 can be communicated (e.g., in real time) to the monitoring and control system 18 at the surface via a wireline cable 16 in at least some embodiments. The data could also or instead be stored in a local memory device within the tool 12 for later collection.

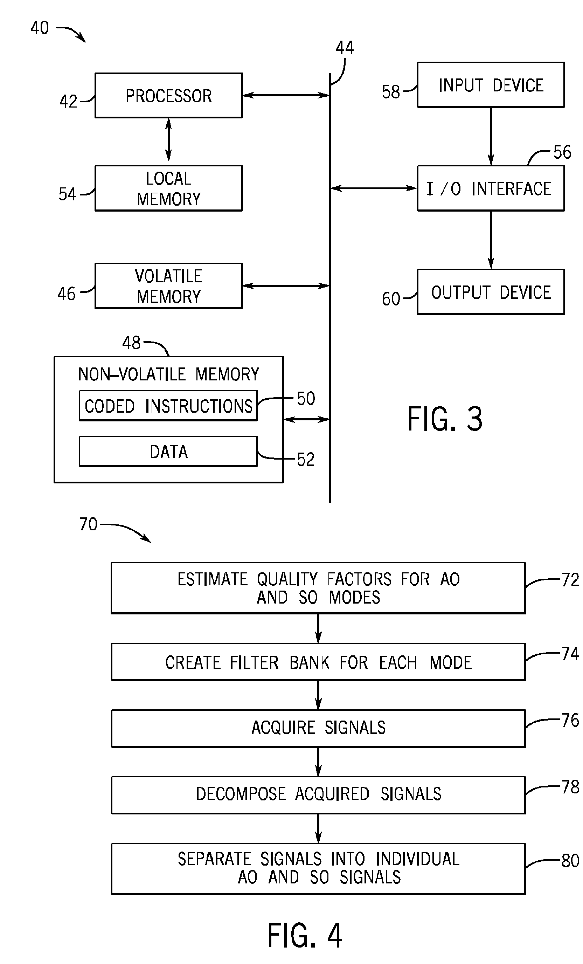

The control and monitoring system 18 may be provided as a processor-based system, an example of which is depicted in FIG. 3. As presently shown, the processor-based system 40 includes at least one processor 42 connected by a bus 44 to volatile memory 46 (e.g., random-access memory) and non-volatile memory 48 (e.g., flash memory). Coded application instructions 50 and data 52 are stored in the non-volatile memory 48. The instructions 50 and the data 52 may also be loaded into the volatile memory 46 (or in a local memory 54 of the processor) as desired, such as to reduce latency and increase operating efficiency of the system 40. The coded application instructions 50 can be provided as software that may be executed by the processor 42 to enable various functionalities described herein, including analysis of signals received via the transducers 34 and 36 for casing cement evaluation. As such, the system 18 may also be referred to as an analysis system. In at least some embodiments, the application instructions 50 are encoded in a non-transitory, computer-readable storage medium, such as the volatile memory 46, the non-volatile memory 48, the local memory 54, or a portable storage device (e.g., a flash drive or a compact disc).

An interface 56 of the system 40 enables communication between the processor 42 and various input devices 58 and output devices 60. The interface 56 can include any suitable device that enables such communication, such as a modem or a serial port. In some embodiments, the input devices 58 include one or more sensing components of the downhole tool 12 (e.g., the transducers 34 and 36) and the output devices 60 include displays, printers, and storage devices that allow output of data received or generated by the system 40.

As generally noted above, various approaches can be used for cement evaluation using Lamb waves. By way of example, in the tool configuration depicted in FIG. 2, the emitter (i.e., transducer 32) can send an oblique incident pulse exciting predominantly a zeroth-order anti-symmetric mode A0, also called the flexural mode, according to the way the energy propagates inside the wall of the pipe 24. When propagating along the pipe 24, the acoustic wave leaks energy into both sides of the pipe wall and the amount of leakage depends on the material properties outside the pipe. Hence an analysis of the recorded signals may provide valuable information to evaluate the cement quality. One example of the analyzed quantities is the flexural attenuation (expressed in dB/m), defined as the ratio of signal amplitudes on both receivers (i.e., transducers 34 and 36)

$$\alpha = 20 \log_{10}\left(\frac{\text{Amp}_{near}}{\text{Amp}_{far}}\right)/d(near, far) \qquad (1)$$

where *d(near, far)* is the distance between the two receivers. A non-parametric analysis method may be used for this approach, in which dictionaries $D_{A0}$ and $D_{S0}$ with moderate mutual coherence and specific to each individual mode are built, and analyzed signals are represented as a weighted sum of dictionary elements

$$x(t) = D_{A0}\alpha_{1|2}(t) + D_{S0}\alpha_{2|2}(t), \quad t = 0 \ldots T \qquad (2)$$

 Strictly speaking, the terminology of symmetric SO and anti-symmetric AO modes refers just to attenuation-free plate waves (Lamb waves) in vacuum, but the present disclosure adopts the convention of labeling those waves whose real wavenumbers follow the corresponding classical Lamb plate waves by the same mode names (SO and AO).

In another approach, the tool 12 excites predominantly the zeroth-order symmetric mode S0, also called the extensional mode. This extensional mode is typically excited with a pulse center frequency lower that that used for exciting the AO mode. The choice of mode, AO versus S0, may be governed by considerations of spatial resolution, attenuation in the fluid, and sensitivity to the elastic properties of the cement. In analogy to the flexural mode approach, the measured signal can be represented again in the form of the weighted sum of equation (2). The results of dispersion relations for fluid-coupled plate waves can be used as approximations for the analysis of tube modes with a fluid- or solid-coupled external interface. This allows for the use of asymptotic wave mode solutions for each of the modes, AO and S0, separately. The neglect of the shear-wave degree of freedom in the solid can yield results for the leaky tube modes with effective attenuation coefficients that lump together the shear- and compressional-wave attenuation pathways.

In another approach, the tool 12 emits an incident pulse from the transducer 32 toward the pipe 24 and concurrently excites both the zeroth-order anti-symmetric (flexural) mode AO and the zeroth-order symmetric (extensional) mode SO in the pipe 24. In at least some embodiments, the emitted pulse is centered on a frequency of 20 kHz to 400 kHz (and is centered on a frequency of 250 kHz in at least one embodiment). The configuration of the tool 12 can be adjusted to favor one mode over the other, but in some cases the adjustment cannot completely annihilate one of the two modes because of the tool operational range. Although the tool 12 is depicted in FIG. 2 as having two receiving transducers 34 and 36, either of these transducers 34 or 36 could be omitted in other embodiments and the tool 12 could be operated with a single receiving transducer for detecting acoustic signals resulting from the pulse emitted by the transducer 32. Further, while certain embodiments are described herein with respect to a multi-modal signal excited in a casing 24 and a downhole tool within a well, it will be appreciated that in other embodiments the presently disclosed analysis techniques may also or instead be used in other pipes that are not within a well and with other tools that are not downhole tools.

In embodiments in which the detected signal is a composite of two distinct Lamb mode signals (e.g., concurrent flexural and extensional modes), the signal may be processed in any suitable manner to separate these two modes. One example of such processing is generally represented by flowchart 70 in FIG. 4. In this embodiment, a quality factor (Q-factor) is estimated (block 72) for each of the AO (flexural) and SO (extensional) modes. As will be appreciated, quality factor is defined as the center-frequency-to-bandwidth ratio. The Q-factor for each mode can be computed from the dispersion characteristics of the individual modes and the ultrasonic transducer pulse spectrum.

A filter bank is then created for each individual mode (block 74), with the design of the filter banks taking into account the quality factors and the dispersion characteristics of the individual modes. Signals may then be acquired (block 76), such as by either or both of transducers 34 and 36, and then decomposed (block 78) into series of coefficients using analysis filters of the filter banks. The separation of the signals into individual AO and SO signals (block 80) is then obtained by minimizing the error between the original signals and the sum of reconstructed individual signals, where the reconstructed individual signals can be provided as output of the synthesis filters applied to the optimized coefficients.

In at least one embodiment, the separation technique includes selecting a subset of coefficients produced by filtering via the first filter bank and a subset of coefficients produced by filtering via the second filter bank, such as by applying a threshold to discard lower-level coefficients. The selected subsets of coefficients can then be used to predict extensional mode and flexural mode waveforms that are based on the estimated quality factors for the individual modes. This prediction can include fitting a sum of reconstructed extensional mode and flexural mode waveforms to the acquired acoustic signal. Additional details regarding such processing are provided below.

By way of explanation, it may be assumed, as a first approximation, that the acquired signal is the sum of two distinct, zeroth-order Lamb modes signals

$$x(t) = x_{A0}(t) + x_{S0}(t), \quad t = 0 \ldots T \quad (3)$$

and that $x_{A0}$ and $x_{S0}$ can be sparsely represented in two frames $F_1$ and $F_2$

$$x_{A0}(t) = F_1 w_1^* \text{ and } x_{S0}(t) = F_2 w_2^*, \quad t = 0 \ldots T \quad (4)$$

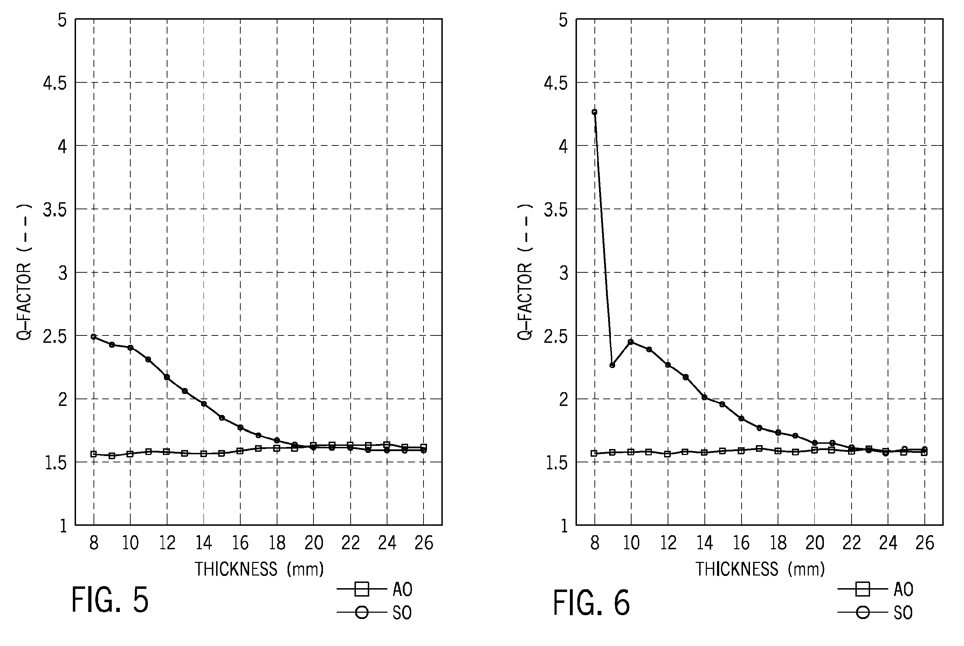

where $w_i^*$ are the frame coefficients. For the specific problem of AO and SO separation, the frames $F_1$ and $F_2$ are respectively adapted to the Q-factor of AO and S0, as the Q-factor is a discriminant factor of zeroth-order Lamb modes signals. The Q-factor can be estimated by the signal bandwidth evaluated at -6dB below the maximum spectrum amplitude. FIGS. 5 and 6 show AO and SO mode Q-factors for the near (FIG. 5) and far (FIG. 6) receivers at one particular incident angle (28 degrees) in the tool configuration of FIG. 2. While the Q-factors are given in FIGS. 5 and 6 for one particular incident angle, other incident angles may be used by the tool 12 and the Q-factors may differ in other embodiments. In general, the difference of Q-factor is more than 0.1 below 18 mm and close to 0 above 18 mm.

Given the Q-factors of AO and S0, the frames $F_1$ and $F_2$ can be given by an iterated perfect reconstruction oversampled filter bank, which can include analysis and synthesis filter banks. Both the analysis and the synthesis filters can be defined using the Q-factor and the oversampling rate $r$

$$\beta = \frac{2}{Q+1}, \quad \alpha = 1 - \frac{\beta}{r} \quad (5)$$

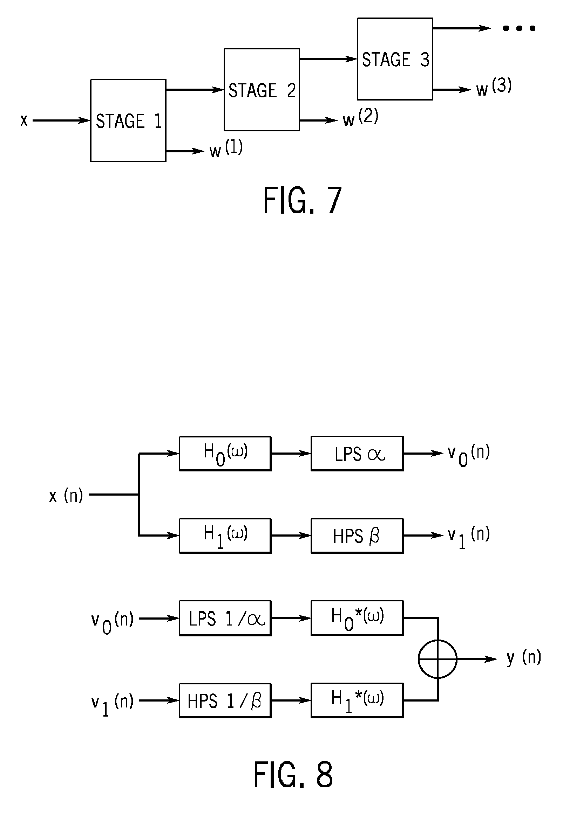

The perfect reconstruction property of the filter banks ensures that is $F_1 F_1^T = I$ and $F_2 F_2^T = I$. One example of a perfect reconstruction oversampled filter bank is generally represented in FIG. 8, while iterative filtering using the filter bank is generally represented in FIG. 7. The filter bank of FIG. 8 includes an analysis filter bank (with analysis filters $H_0$ and $H_1$) shown in the top half of the figure and a synthesis filter bank (with synthesis filters $H_0^*$ and $H_1^*$) shown in the bottom half. The filters $H_0$ and $H_1$ are also functions of the parameters $\alpha$ and $\beta$, such that $\alpha + \beta > 1$, hence the oversampled characteristic. The blocks LPS and HPS are low-pass and high-pass scaling, and the subband signals $v_0$ and $v_1$ have sampling rates of $\alpha f_s$ and $\beta f_s$, respectively. Iterated filter bank decomposition is generally depicted in FIG. 7, in which each stage includes the analysis filter bank depicted in FIG. 8. It will be appreciated that iterated filter bank reconstruction may be generally represented as the reverse of the iterated decomposition.

The two components can be estimated by solving the following minimization problem

$$(w_1^*, w_2^*) = \text{argmin}_{w_1, w_2} \ \|y - F_1 w_1 - F_2 w_2\|_2^2 + \lambda_1 \|w_1\|_1 + \lambda_2 \|w_2\|_1 \quad (6)$$

where the coefficients $\lambda_1$ and $\lambda_2$ are two regularization parameters. The first term ($\ell_2$ norm) is a fidelity term, ensuring that the decomposition has a small residual. The two other terms ($\ell_1$ norms) ensure that the components have a sparse representation in their respective frames. The estimations of the two components may be given by $\hat{x}_1 = F_1 w_1^*$ and $\hat{x}_2 = F_2 w_2^*$.

The problem (6) can be rewritten as an optimization problem under constraints

$$(u_1^*, u_2^*, w_1^*, w_2^*) \quad = \quad \text{argmin}_{u_1, u_2, w_1, w_2} \; \|y - F_1 u_1 - F_2 u_2\|_2^2 + \lambda_1 \|w_1\|_1 + \lambda_2 \|w_2\|_1$$

$$\text{such that } u_1^* = w_1^* \text{ and } u_2^* = w_2^*$$

$$(7)$$

where $u_i$ are splitting variables and then solved by the split augmented Lagrangian shrinkage algorithm, which solves two minimization sub-problems

$$(u_1^{k+1}, u_2^{k+1}) \quad = \quad \text{argmin}_{u_1, u_2} \; \|y - F_1 u_1 - F_2 u_2\|_2^2 + \mu\left\|(u_1, u_2) - (w_1^k, w_2^k) - (d_1^k, d_2^k)\right\|_2^2$$

$$(w_1^{k+1}, w_2^{k+1}) \quad = \quad \underset{w_1, w_2}{\text{argmin}} \; \lambda_1 \|w_1\|_1 + \lambda_2 \|w_2\|_1 + \mu\left\|(u_1^{k+1}, u_2^{k+1}) - (w_1, w_2) - (d_1^k, d_2^k)\right\|_2^2 \quad (8)$$

$$(d_1^{k+1}, d_2^{k+1}) \quad = \quad (d_1^k, d_2^k) - (u_1^{k+1}, u_2^{k+1}) - (w_1^{k+1}, w_2^{k+1})$$

where k is the iteration index, $\mu$ is a penalty parameter, and $d_i^k$ are directions of minimization.

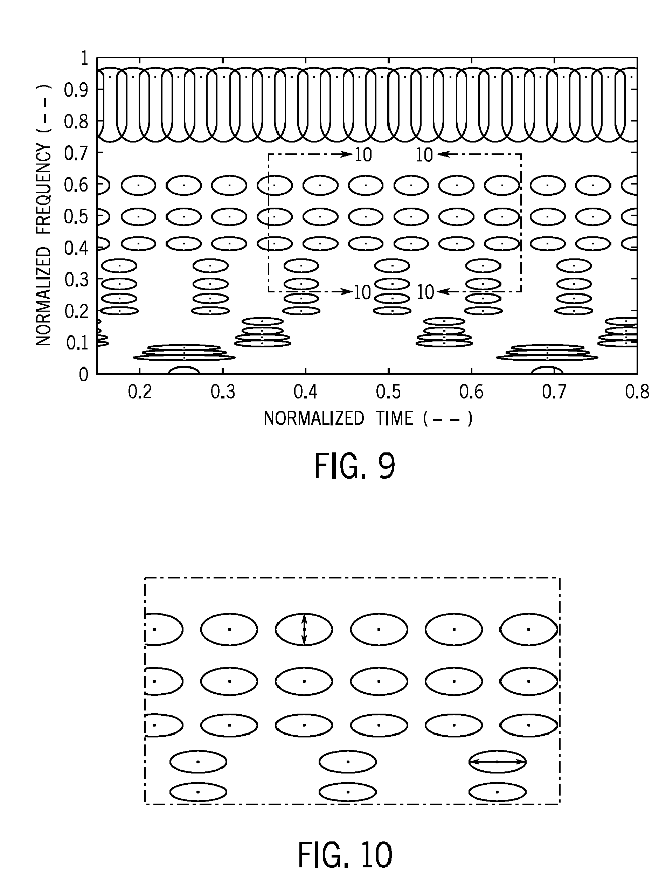

By way of example, tiling of the time-frequency plane is depicted in FIG. 9 for a Q-factor of 2.8 and an oversampling rate $r$ of 3.1. For clarity, just some of the tiles are shown. With zero-phase filters $H_0$ and $H_1$ in FIG. 8, the main axes of the tiles are either vertical or horizontal, as generally shown by the arrows in the detail view of FIG. 10. This regular tiling is not well suited to decompose dispersive signals. Indeed, both Lamb modes exhibit dispersion which means that the phase and group velocities depend on the frequency

$$v_{p,m}(\omega) = \frac{\omega}{\mathcal{R}e(\kappa_m)}, \quad m = A0, S0 \tag{9}$$

$$v_{g,m}(\omega) = \frac{\partial \omega}{\partial\left(\frac{\omega}{v_{p,m}(\omega)}\right)}, \quad m = A0, S0 \tag{10}$$

where $\kappa_m$ are the wavenumbers for modes $m = A0, S0$. To guide the decomposition by the dispersion curves, in at least one embodiment the phase of the filters $H_0$ and $H_1$ is modified (keeping the perfect reconstruction property) by replacing the filter $H_{k, k=0,1}$ by

$$\widetilde{H}_k(\omega) = H_k(\omega) e^{\left(-j\gamma\left(\frac{\omega - \omega_c}{r}\right)^2\right)}, k = 0,1 \tag{11}$$

with the parameter $\gamma$ in equation (11) defined as the group delay derivative (at each level of the decomposition)

$$\gamma_m(\omega) = \partial \delta_m(\omega)/\partial\omega, \quad m = A0, S0 \tag{12}$$

$$\delta_m(\omega) = \frac{l_{pipe}}{v_{g,m}(\omega)} + \delta_{mud}, \quad m = A0, S0 \tag{13}$$

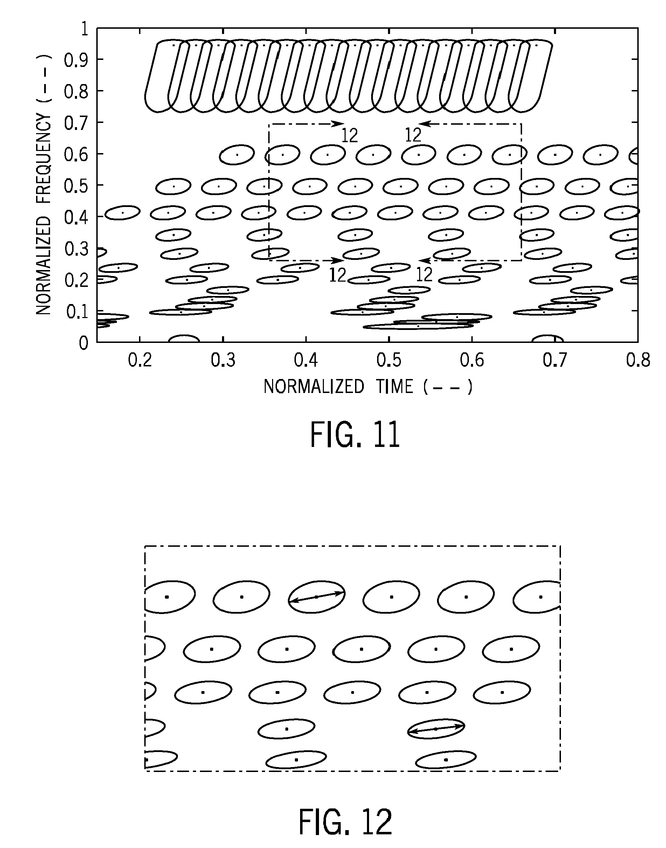

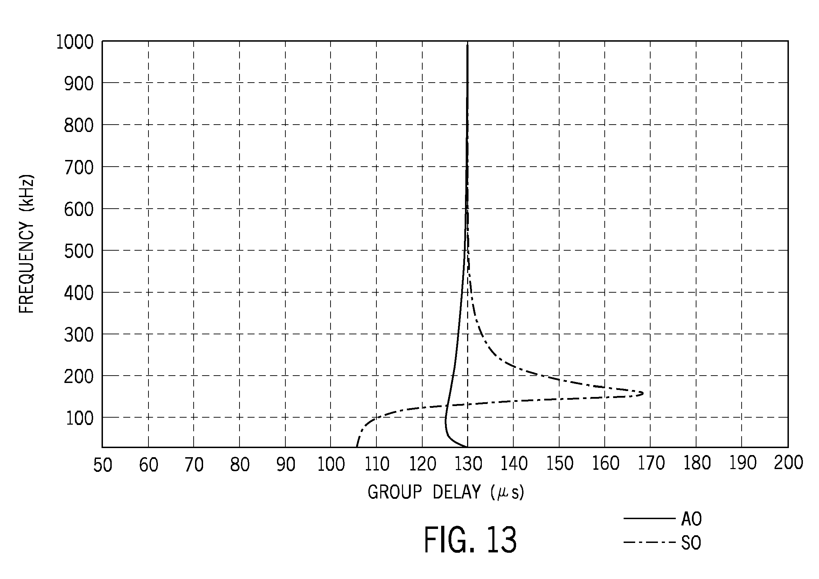

where $l_{pipe}$ is the propagation distance in the pipe (e.g., casing 24) and $\delta_{mud}$ is the propagation time in drilling mud (or in some other transmission medium) in the pipe. The parameter $\gamma$ rotates the main axes of the tiles by a certain angle. One example of such rotation is given in FIGS. 11 and 12 using a fixed $\gamma = 35$, with the Q-factor remaining 2.8 and the oversampling rate $r$ remaining 3.1. (Again, just some of the tiles are shown here for clarity.) As a consequence, the decomposition will locally match the slope of the group delay curve. Examples of theoretical group delay curves for both AO and SO modes for a particular pipe thickness of 16 mm are depicted in FIG. 13. While both filters can be adapted to a group delay curve, in one implementation it is just the filter $H_1$ that is adapted to the group delay curve.

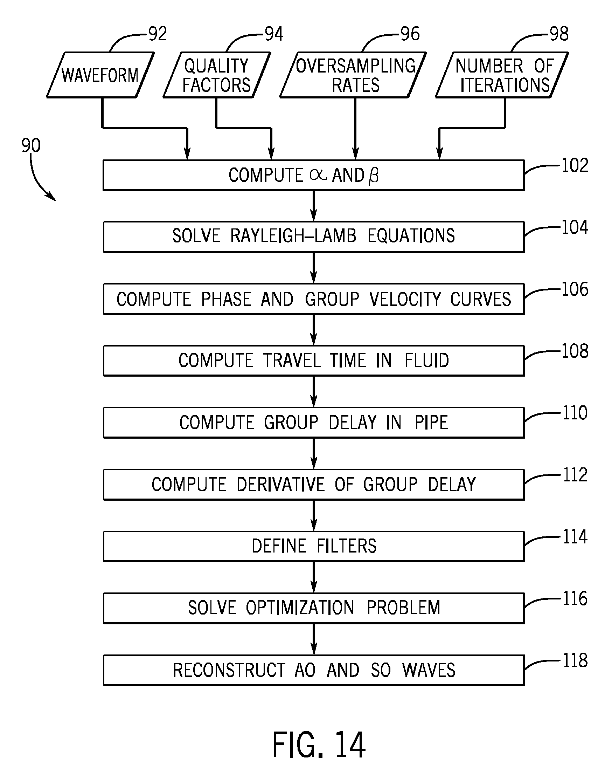

As noted above, the AO and SO signals may be separated in any suitable manner. Another example of a method for separating such signals is generally represented by flowchart 90 in FIG. 14. The presently represented method includes various inputs, such as a waveform $y$ of $N$ samples (block 92), which may be detected via transducer 34 or 36 as a result of the excitation of a multi-modal Lamb wave excited in the pipe 24, as described above. Inputs may also include estimated quality factors $Q_1$ and $Q_2$ (block 94) for AO and SO waves, respectively; oversampling rates $r_1$ and $r_2$ (block 96) for AO and SO waves, respectively; and a desired number of iterations $N_{it}$ for signal decomposition (block 98).

The method can include computing $\alpha_i$ and $\beta_i$, $i = 1,2$ (e.g., using equation (5)), as represented in block 102, and solving Rayleigh-Lamb equations using asymptotic code, as represented in block 104. The method can also include computing phase and group velocity curves (via equations (9) and (10), for instance), as represented in block 106, as well as computing travel time ($\delta_{mud}$) of an acoustic signal in a drilling mud or other logging fluid in the pipe 24, as represented in block 108. Additionally, the method represented by flowchart 90 includes computing group delay ($\delta_m$) over a distance $l_{pipe}$ (e.g., using equation (13)) and computing a derivative of the group delay (e.g., $\partial\delta_m(\omega)/\partial\omega$, m = $A0, S0$), as represented in blocks 110 and 112.

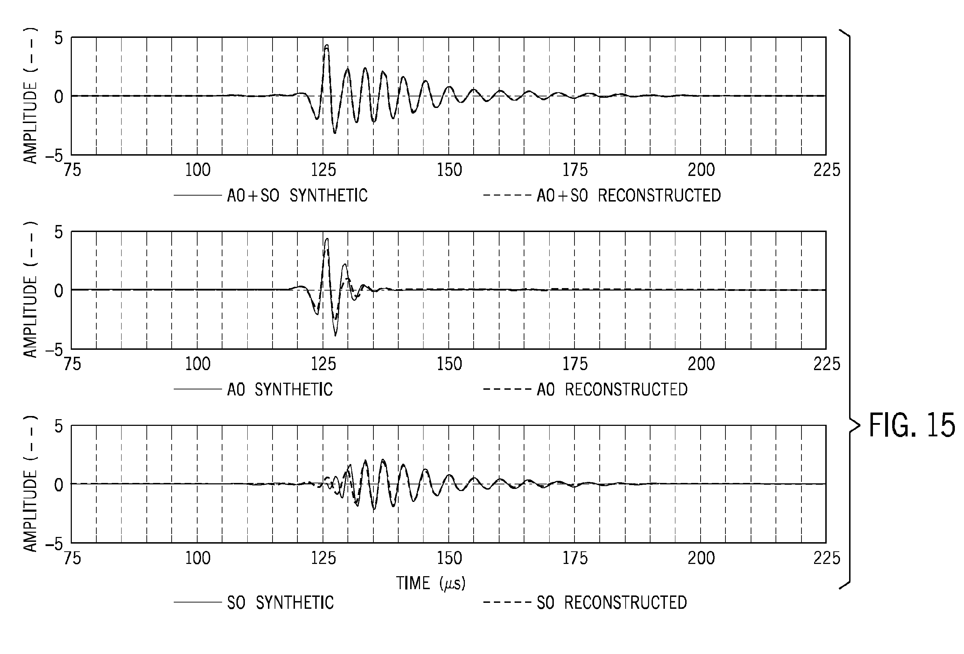

Further, the method can include defining filters $\tilde{H}_{1,i}(\omega)$, $i = 1,2$ with parameter $\gamma$ (e.g., using equation (11)), as represented in block 114. It will be appreciated that the filters may be defined based on estimated Q-factors for the AO and SO waves, as described above. Further still, the method can include decomposing the acquired waveform via the defined filters, which can include solving an optimization problem (block 116), such as equation (8), in $N_{it}$ iterations. Then, from the final $w_i^{N_{it}}$, $i = 1,2$, estimated A0 and S0 waves can be reconstructed (block 118) by $\hat{x}_1 = F_1 w_1^{N_{it}}$ and $\hat{x}_2 = F_2 w_2^{N_{it}}$. A comparison of synthetic A0 and SO waves (i.e., simulated single-mode signals) with AO and SO waves reconstructed in accordance with the present techniques is depicted in the lower two plots of FIG. 15, while the uppermost plot in FIG. 15 compares synthetic and reconstructed composites of the AO and SO waves.

The foregoing outlines features of several embodiments so that those skilled in the art may better understand aspects of the present disclosure. Those skilled in the art should appreciate that they may readily use the present disclosure as a basis for designing or modifying other processes and structures for carrying out the same purposes or achieving the same advantages of the embodiments introduced herein. Those skilled in the art should also realize that such equivalent constructions do not depart from the spirit and scope of the present disclosure, and that they may make various changes, substitutions and alterations herein without departing from the spirit and scope of the present disclosure.

**Claims**

1. A method comprising:

   emitting an ultrasonic pulse, from an acoustic logging tool within a well, toward a casing within the well so as to excite a multi-modal Lamb wave within the casing, the multi-modal Lamb wave having flexural and extensional modes;
   detecting, with the acoustic logging tool, acoustic signals generated by the multi-modal Lamb wave within the casing; and
   processing the detected acoustic signals to separate acoustic signals generated by the extensional mode from acoustic signals generated by the flexural mode, wherein processing the detected acoustic signals to separate the acoustic signals generated by the extensional mode from the acoustic signals generated by the flexural mode includes:

      filtering the detected acoustic signals with a first filter bank having one or more filters that filter the detected acoustic signals based on an estimated quality factor for the extensional mode and on dispersion characteristics of the extensional mode to produce a first set of coefficients;
      filtering the detected acoustic signals with a second filter bank having one or more filters that filter the detected acoustic signals based on an estimated quality factor for the flexural mode and on dispersion characteristics of the flexural mode to produce a second set of coefficients;
      selecting a subset of the first set of coefficients and a subset of the second set of coefficients; and
      using the selected subsets of coefficients to predict an extensional mode waveform and a flexural mode waveform based on the estimated quality factors for the extensional and flexural modes.

2. The method of claim 1, comprising:

   computing the estimated quality factor for the extensional mode based on dispersion characteristics of the extensional mode and on the spectrum of the ultrasonic pulse; and
computing the estimated quality factor for the flexural mode based on dispersion characteristics of the flexural mode and on the spectrum of the ultrasonic pulse.

3. The method of claim 1 or claim 2, wherein filtering the detected acoustic signals with the first filter bank and filtering the detected acoustic signals with the second filter bank include filtering the detected acoustic signals with decomposition filters.

4. The method of claim 3, wherein at least one of the decomposition filters of the first filter bank includes a group delay parameter for the extensional mode.

5. The method of claim 4, wherein at least one of the decomposition filters of the second filter bank includes a group delay parameter for the flexural mode.

6. The method of any of claims 1 to 5, wherein using the selected subsets of coefficients to predict the extensional mode waveform and the flexural mode waveform includes fitting a sum of a reconstructed extensional mode waveform and a reconstructed flexural mode waveform to the detected acoustic signal.

7. The method of any of claims 1 to 6, wherein selecting the subsets of the first and second sets of coefficients includes applying a threshold to discard lower-level coefficients.

8. The method of any of claims 1 to 7, wherein emitting the ultrasonic pulse toward the casing includes emitting an ultrasonic pulse with a central frequency between 20 kHz and 400 kHz.

9. The method of any of claims 1 to 8, comprising using the predicted flexural mode waveform to evaluate cement provided about an exterior of the casing.

10. An apparatus comprising:

a downhole tool that facilitates data acquisition within a well, the downhole tool including an acoustic transmitter and an acoustic receiver, wherein the acoustic transmitter and the acoustic receiver are positioned with respect to one another so as to enable the acoustic transmitter to emit acoustic signals outwardly from the downhole tool toward a casing within the well to generate a Lamb wave having flexural and extensional modes in the casing and to enable the acoustic receiver to detect the Lamb wave when the downhole tool is positioned inside the casing;
an analysis system configured to receive data from the downhole tool and to separate concurrent flexural and extensional mode components of the detected Lamb wave using quality factors for the flexural and extensional modes.

11. The apparatus of claim 10, wherein the acoustic transmitter and the acoustic receiver are angled toward one another at a shared angle of incidence.

12. The apparatus of claim 10 or claim 11, wherein the acoustic transmitter includes an ultrasonic transmitter and the acoustic receiver includes an ultrasonic receiver.

13. The apparatus of any of claims 10 to 12, wherein the downhole tool is positioned inside the casing.

14. The apparatus of any of claims 10 to 13, wherein the downhole tool includes at least one additional acoustic receiver positioned to enable the additional acoustic receiver to detect the Lamb wave when the downhole tool is positioned inside the casing.

15. The apparatus of any of claims 10 to 14, wherein the downhole tool is a wireline tool.

FIG. 1

FIG. 2

40

42 — PROCESSOR ←→ 44

54 — LOCAL MEMORY

46 — VOLATILE MEMORY

48 — NON-VOLATILE MEMORY
CODED INSTRUCTIONS — 50
DATA — 52

58 — INPUT DEVICE

56
I / O INTERFACE

60 — OUTPUT DEVICE

**FIG. 3**

70

| ESTIMATE QUALITY FACTORS FOR AO AND SO MODES | — 72 |

| CREATE FILTER BANK FOR EACH MODE | — 74 |

| ACQUIRE SIGNALS | — 76 |

| DECOMPOSE ACQUIRED SIGNALS | — 78 |

| SEPARATE SIGNALS INTO INDIVIDUAL AO AND SO SIGNALS | — 80 |

**FIG. 4**

FIG. 5

⊟— AO
—⊖— SO

FIG. 6

⊟— AO
—⊖— SO

STAGE 3 $\longrightarrow$ • • •

STAGE 2 $\longrightarrow$ STAGE 3

$\longrightarrow$ $w^{(3)}$

x $\longrightarrow$ STAGE 1

$\longrightarrow$ $w^{(2)}$

$\longrightarrow$ $w^{(1)}$

## FIG. 7

$x(n)$ $\longrightarrow$ $H_0(\omega)$ $\longrightarrow$ LPS $\alpha$ $\longrightarrow$ $v_0(n)$

$H_1(\omega)$ $\longrightarrow$ HPS $\beta$ $\longrightarrow$ $v_1(n)$

$v_0(n)$ $\longrightarrow$ LPS $1/\alpha$ $\longrightarrow$ $H_0^*(\omega)$

$\longrightarrow$ $y(n)$

$v_1(n)$ $\longrightarrow$ HPS $1/\beta$ $\longrightarrow$ $H_1^*(\omega)$

## FIG. 8

FIG. 9

FIG. 10

FIG. 11

FIG. 12

FIG. 13

FIG. 14

FIG. 15

Europäisches
Patentamt

European
Patent Office

Office européen
des brevets

# EUROPEAN SEARCH REPORT

Application Number

EP 16 30 6114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/209539 A1 (LE CALVEZ JEAN-LUC [FR] ET AL) 21 July 2016 (2016-07-21) * abstract; figures 6,7 * * the whole document * * paragraph [0044] - paragraph [0049] * | 10-15 | INV. G01V1/48 |
| A | ROBERT VAN KUIJK ET AL: "A Novel Ultrasonic Cased-Hole Imager for Enhanced Cement Evaluation", PROCEEDINGS OF INTERNATIONAL PETROLEUM TECHNOLOGY CONFERENCE, 1 January 2005 (2005-01-01), XP055064256, DOI: 10.2523/10546-MS ISBN: 978-1-55-563991-4 * the whole document * | 1,10 | |
| X | US 2012/069705 A1 (ZHAO JINSONG [US]) 22 March 2012 (2012-03-22) | 1 | |
| A | * abstract; figures 6,7,11-14 * * paragraph [0062] * * paragraph [0038] - paragraph [0039] * * paragraph [0052] - paragraph [0059] * | 2-15 | TECHNICAL FIELDS SEARCHED (IPC) G01V E21B |
| A | RICCARDO BERNARDINI ET AL: "Arbitrary Tilings of the Time-Frequency Plane Using Local Bases", IEEE TRANSACTIONS ON SIGNAL PROCESSING, IEEE SERVICE CENTER, NEW YORK, NY, US, vol. 47, no. 8, 1 August 1999 (1999-08-01), XP011058646, ISSN: 1053-587X * abstract; figures 1,9 * | 1-15 | |
| A | US 2009/067286 A1 (BOSE SANDIP [US] ET AL) 12 March 2009 (2009-03-12) * abstract; figure 5 * | 1 | |

The present search report has been drawn up for all claims

| Place of search | Date of completion of the search | Examiner |
|---|---|---|
| The Hague | 14 March 2017 | De Bekker, Ruben |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 6114

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2017

| Patent document cited in search report | | Publication date | Patent family member(s) | | Publication date |
|---|---|---|---|---|---|
| US 2016209539 | A1 | 21-07-2016 | NONE | | |
| US 2012069705 | A1 | 22-03-2012 | US 2012069705 A1 | | 22-03-2012 |
| | | | WO 2013070831 A2 | | 16-05-2013 |
| US 2009067286 | A1 | 12-03-2009 | BR PI0810134 A2 | | 29-10-2014 |
| | | | US 2009067286 A1 | | 12-03-2009 |
| | | | WO 2009035848 A2 | | 19-03-2009 |

EPO FORM P0459

For more details about this annex : see Official Journal of the European Patent Office, No. 12/82